(19) **Europäisches Patentamt European Patent Office Office européen des brevets**

(11) **EP 1 268 673 B1**

(12) **EUROPEAN PATENT SPECIFICATION**

(45) Date of publication and mention of the grant of the patent:
**09.07.2008 Bulletin 2008/28**

(21) Application number: **01907582.9**

(22) Date of filing: **05.02.2001**

(51) Int Cl.:
***C08L 95/00*** (2006.01)   ***E01C 7/18*** (2006.01)

(86) International application number:
**PCT/FI2001/000101**

(87) International publication number:
**WO 2001/057139 (09.08.2001 Gazette 2001/32)**

(54) **EMULSION SURFACING MIX FOR PAVING A ROAD, AND A ROAD SURFACING MADE THEREOF**

EMULSIONSBESCHICHTUNGSMISCHUNG ZUM ASPHALTIEREN EINER STRASSE SOWIE DARAUS HERGESTELLTER STRASSENASPHALT

MELANGE D'EMULSION DE REVETEMENT POUR LE PAVAGE DE ROUTES ET REVETEMENT ROUTIER CONSTITUE DE CE MELANGE D'EMULSION

(84) Designated Contracting States:
**AT BE CH CY DE DK ES FI FR GB GR IE IT LI LU MC NL PT SE TR**

(30) Priority: **07.02.2000 FI 20000251**

(43) Date of publication of application:
**02.01.2003 Bulletin 2003/01**

(73) Proprietor: **Destia Oy
00520 Helsinki (FI)**

(72) Inventor: **LAITINEN, Esko
FIN-90830 Haukipudas (FI)**

(74) Representative: **Kaukonen, Juha Veikko et al
Kolster Oy Ab
Iso Roobertinkatu 23
P.O. Box 148
00121 Helsinki (FI)**

(56) References cited:
**EP-A1- 0 655 484      WO-A1-94/10247
DE-A1- 3 245 068      GB-A- 2 208 270
US-A- 5 223 031**

**Description**

The invention relates to an emulsion surfacing mix for paving a road, comprising bitumen, water, coupling agent, emulsifier, aggregate and breaking-controlling agent.

Further, the invention relates to a road surfacing.

The emulsion surfacing mix refers to a material used for preparing a road surfacing, which material is made by mixing water and bitumen to form a bitumen emulsion and further mixed into an aggregate. In the emulsion surfacing mix, bitumen heated to the mixing temperature and used in hot mixes as a binding agent is thus replaced with an emulsified binding agent. The emulsion of water and bitumen, which are insoluble to each other, is usually maintained by emulsifiers. It is to be noted that in this application the term road refers not only to roads and streets but also to parking areas, pedestrian and bicycle ways and other areas that are typically paved with an asphalt surfacing.

The bitumen vapours caused by an emulsion surfacing mix are clearly lower than in hot mixes, and therefore the hydrocarbon load directed at the environment is significantly decreased. In addition, the treating temperatures of an emulsion mix are lower - usually 60 to 90 °C - which contributes to reducing the environmental load caused by the paving process and the exposure of the persons performing the paving to compounds evaporating from the mix.

However, use of emulsion mixes has been complicated by the short breaking time of the emulsion binding agent. Breaking refers to separation of water from bitumen, i.e. breaking of the emulsion, which limits the processing time available for transporting, laying and compressing of the mix. The breaking begins when the electrostatic charge formed by the emulsifier on the surface of the bitumen drops is discharged due to the surface charge of opposite sign in the aggregate. The breaking of the emulsion binding agent thus begins as early as in the mixing and advances during the transport, laying and compression of the mix. As the breaking advances, the workability of the mix is correspondingly weakened, and when the breaking has advanced too far, it becomes impossible to lay and compress the mix, because the emulsion no longer decreases the rigidity of the asphalt. The breaking time is in practice about 30 to 45 minutes. The emulsion mixes cannot therefore be transported very far from the mixing apparatus but the mixing apparatus must be taken close to the object to be paved, which is not always possible. Thus, it is not possible to use an aggregate breaking the emulsion rapidly, but an aggregate with slower breaking properties must be transported even from a longer distance. When the breaking of the mix advances too far, the laying and compression of the mix become difficult, causing roughness and a large empty space in the surfacing. The breaking of the mix can advance so far that the mix is no longer usable but must be disposed of. The above aspects cause a plurality of employee, apparatus and raw material costs. On the other hand, the breaking time must not be too long either but it must be optimized in such a way that most of the water discharges from the mix before compression of the mix laid on the road. If there is still excessive water in the mix after the compression, there will be cavities filled with water in the surfacing. When the cavities are emptied, what remains is a porous and easily deforming surfacing. It must be emphasized, however, that the most essential problem with known emulsion mixes is specifically the short breaking time.

The breaking time can be controlled to some extent by changing the mixing temperature of the mix: raising the temperature makes the breaking time shorter, and correspondingly, lowering the temperature makes the breaking time longer. However, heating of the mix improves the compressibility of the mix at the final stage of the emulsion breaking. Typically, the temperature of the mix is raised to the mixing temperature for example by means of a steam generator. The capacity of steam generators is sufficient for raising the temperature of the mix to over 80 °C. This will not result in a considerably longer compression time, though. Further, raising the temperature naturally increases the production costs of the mix. In addition to raising the temperature, it is known to control the breaking time by changing the composition of the emulsion. This has been pursued for instance by adding hydrochloric acid to the mix, the effect of which is based on an increase in the acidity of the mix and a resulting decrease in the discharge speed of the surface charge. Also added to the mix, an emulsifier maintains the emulsion by preventing bitumen drops from adhering to each other. However, known solutions are rather inefficient and the controlling range allowed for the breaking time is very limited: in practice, the chemical properties of the aggregate mixed into the mix may have a considerably greater effect on the breaking time than the known controlling materials. In EP-A-0 655 484 the breaking agent is mixed into the composition just before laying of the composition. Therefore, at the beginning of the compression, in the mix there is excessive water. This will cause water filled cavities in the surfacing and, further, a porous and easily deforming surfacing. In WO-A-94/10247 the breaking agent is mixed into the mix in a form of a suspension in oil. Said oil prevents completely contacts or reactions between the breaking agent and the rest of the mix until laying and compression of said mix. Therefore, there is excessive water in the layered mix, which will cause same problems described above. DE-A-3245068 describes bitumen emulsion/asphalt mixtures that are prepared by the joint addition of hydraulic bindable powders and cation-active bitumen emulsion. US-A-5 223 031 discloses cement/asphalt -mixtures comprising an aggregate, an asphalt emulsion, cement, a hydraulic inorganic material and water.

An object of this invention is to provide an emulsion surfacing mix, in which above-mentioned drawbacks are avoided.

It is characteristic that the breaking-controlling agent is added as a mixture with the aggregate and that the breaking-controlling agent comprises granulated blast-furnace slag, quartzite and/or feldspar.

It is characteristic of the road surfacing according to the invention that it is made at least partly of the emulsion surfacing mix according to claim 1.

The essential idea of the invention is that the emulsion surfacing mix contains breaking-time-controlling material comprising silicon as defined in claim 1. Further, it is the idea of a preferred embodiment of the invention that the breaking-time-controlling material is granulated blast-furnace slag or slag powder ground out of it, which materials also function as a binding agent for the emulsion surfacing.

It is an advantage of the invention that the controlling materials comprising silicon as defined in claim 1 are very effective, whereby the breaking time of the mix can be controlled in a considerably larger controlling range than in the prior art. Extending the breaking time essentially enables use of emulsion mixes in road portions considerably further away from the mixing point of the mixes, in other words emulsion mixes can be used in a considerably larger road network than previously in an economically reasonable manner. Since the breaking properties of the aggregate can be greatly affected by a controlling material, all aggregates fulfilling the asphalt standards can be used as the raw material of an emulsion surfacing. Owing to the controlling material efficiency according to the invention, the temperature at which the emulsion mix and the aggregate are mixed can be lowered without excessively reducing the compression properties of the mix, which decreases the energy consumption in the mixing. The breaking-time-controlling materials are inexpensive and easily available. The grain size of the controlling agent can be selected in such a way that it functions as fine aggregate in the mix, forming together with bitumen a mastic binding coarser structural parts. Another advantage is that an emulsion mix according to the invention can be applied to both ordinary asphalts and reclaimed asphalts.

The invention is explained in more detail in the attached drawing, in which

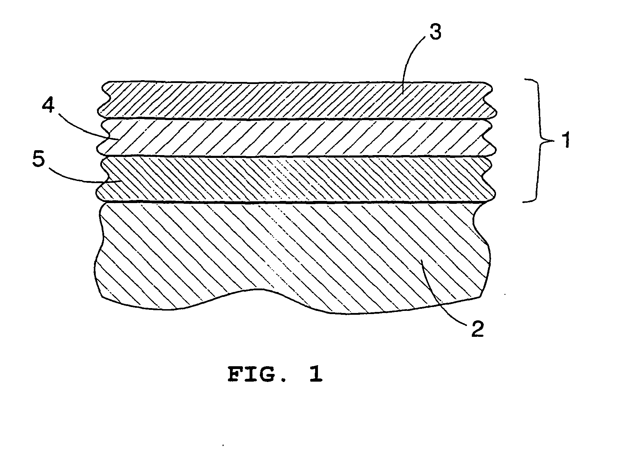

Figure 1 schematically illustrates a side view and a cross-section of an embodiment of a road surfacing structure made of an emulsion surfacing mix according to the invention.

Figure 1 schematically shows a side view and a cross-section of an embodiment of a road surfacing structure made of an emulsion surfacing mix according to the invention. The surfacing structure 1 is laid and compressed upon the road structure 2. The surfacing structure 1 comprises several courses, i.e. a wearing course 3, a binding course 4 and a bound upper part 5 of the base course. It is known *per se* to a person skilled in the art that a road surfacing structure does not always necessarily comprise all courses 3 to 5 of the surfacing structure. Also, the road structure 2 usually comprises several structural courses upon each other, such as base and sub-base courses and protective courses, each of which has a certain function. They are well known to a person skilled in the art, though, so they will not be described in greater detail in this application. Correspondingly, the steps relating to the laying and compression of the surfacing are known to a person skilled in the art, so that they will not be treated in more detail herein either.

The emulsion mix forming the courses 3 to 5 of the surfacing structure is made in such a way that a bitumen emulsion is prepared by mixing a dispersion of bitumen and water, which is further mixed into an aggregate heated to a suitable temperature. The bitumen in the mix functions as a binding agent, which binds the aggregate in such a way that a uniform mix that can be shaped is made of the components. The function of the water is to form with bitumen an emulsion having suitable viscosity in order to distribute the bitumen uniformly into the whole mix. The aggregate usually comprises several different grain sizes, the specified shares of which vary depending on the type of the surfacing. In addition, the breaking-time-controlling material is mixed into the aggregate. In connection with the emulsification an emulsifier is added to the emulsion, which emulsifier maintains the emulsion, preventing bitumen drops from adhering to each other. Numerous different emulsifiers are known and they are not treated in greater detail in this context. The completed emulsion mix may comprise not only said components but also other components, such as coupling agent, which improves the adhesion between the bituminous binding agent and the aggregate. Organic and inorganic fibres may also be added to the mix, which fibres improve the strength properties of the surfacing.

The emulsion mixes, like other mixtures of an aggregate and a bituminous binding agent, i.e. asphalts, can be divided into asphalts and reclaimed asphalts. In reclaimed asphalts at least 20% of the raw material is asphalt mass made of asphalt or asphalt surfacing by crushing or milling. The surfacing structure 1 may naturally be formed in such a way, too, that only a part of its courses 3 to 5 are made of an emulsion mix, the other parts 3 to 5 being made of hot mix, for example.

When the bitumen emulsion is mixed into the aggregate, breaking begins to occur in the mix, in other words water begins to separate from bitumen. The breaking advances during the transport, laying and compression of the mix, and when it has advanced sufficiently far, using the mix for forming the surface structure becomes impossible. The broken mix cannot be brought back into a state in which it could be treated, because the bitumen has already adhered to the aggregate and because the viscosity of the bitumen is too high due to its low temperature.

The speed of the breaking time of the mix is affected most considerably by the chemical properties of the aggregate, which are indicated by the breaking index of the aggregate. The higher the breaking index, the longer the processing time of the mix. There are great differences in the breaking indexes of different aggregates, which naturally results in great variations in the breaking times of emulsion mixes, too. Prior art breaking-time-controlling materials have not had sufficient effect on these variations.

Now it has been surprisingly observed that by using as the breaking-time-controlling materials of the mix materials containing silicon or silicon dioxide $SiO_2$, such as quartzite and feldspar, or industry slag, i.e. an industrial by-product, granulated blast-furnace slag or slag powder, separation of water from bitumen can be effectively slowed down. By using said materials a processing time of at least 1.5 hours can be achieved, which is double the processing time of about 30 to 45 minutes achieved in the prior art. In addition, the breaking-time-controlling materials according to the invention have the considerable advantage that they substantially eliminate the effect of the breaking index of the aggregate used on the length of the breaking time. With breaking-time-controlling materials of the mix the separation speed of the water can be adjusted such that most of the water has discharged at the latest when the mix is compressed upon the road structure. The breaking time of the mix is optimal when the time is sufficient for transporting, laying and compressing the mix upon the road to be paved but when no excessive water remains in the compressed mix. The compressed mix still contains some water, which discharges by diffusing and evaporating.

Table 1 shows the measurement results of the effect of some breaking-time-controlling materials according to the invention on the breaking indexes of a given aggregate A with four different bitumen emulsions. The measurements have been carried out in accordance with the standard PANK-4119, which complies with the standard draft prEN 13075-1, where applicable. In the experiment, an emulsion sample is tempered in a plastic vessel to a temperature of $25\pm1$ °C. A metallic mixing vessel and mixing blades are weighed. $100\pm1$ g of emulsion is poured into the mixing vessel and weighed together with the mixing blades. A given fraction of the used aggregates according to the standard is added to the bitumen emulsion in the mixing vessel at a feed rate of 0.3 g/s. If the sample in question comprises breaking-time-controlling material, it is added to the aggregate in such a way that the feed rate of the mixture of the aggregate and the controlling material is 0.3 g/s. At the same time, the sample is continuously mixed in such a way that the aggregate to be added is uniformly distributed into the emulsion. With the addition of the aggregate the emulsion mix stiffens and finally breaks, when the aggregate and the binding agent form a lump which detaches from the edges of the vessel. The mix having broken, the feed of the aggregate is stopped. The broken sample is weighed in a metal vessel together with the mixing blades. The breaking index is calculated from the weighing results by the formula

$$MI = \left[(m_3 - m_2) / (m_2 - m_1)\right] \times 100$$

where MI = breaking index; $m_1$ = mass of mixing vessel and mixing blades [g]; $m_2$ = mass of bitumen emulsion, mixing vessel and mixing blades [g]; and $m_3$ = mass of bitumen emulsion, mixing vessel, mixing blades and added aggregate [g]. The value of the breaking index indicates in practice the amount of aggregate which is required to break 100 g of bitumen emulsion. In order to enable comparison between measurement results performed in different laboratories, a given aggregate is defined as a reference or standard material. The breaking index values measured with this aggregate are presented on line 'reference' in Table 1.

Table 1

| Breaking index/ aggregate A | Emulsion 1 | Emulsion 2 | Emulsion 3 | Emulsion 4 |
|---|---|---|---|---|
| Reference | 136.9 | 159.1 | 155.4 | 166.1 |
| 100 % aggregate A | 92.7 | 115.2 | 96.7 | 93.4 |
| 70 % aggregate, 30 % quartzite | 108.6 | 98.9 | 118.4 | 115.6 |
| 70 % aggregate, 30 % slag powder | 118.4 | 135.2 | 95.6 | 94.9 |
| 70 % aggregate, 30 % feldspar | 100.8 | 95.2 | 107.3 | 100.2 |

As can be noted from Table 1, the breaking-time-controlling material has clearly increased the breaking indexes of almost all emulsion mixes: in other words, the processing time of the mix has extended considerably. The increase in the breaking indexes of bitumen emulsions 1 and 2 is mostly due to slag powder, the increase in the breaking indexes of emulsions 3 and 4 being mostly due to quartzite. By contrast, the breaking index of emulsion 2 has decreased with the addition of quartzite or feldspar, and the breaking index of emulsion 3 has decreased when slag powder has been added. Thus, one single controlling material cannot be applied to increase the processing time of all types of bitumen emulsions, but the controlling material has to be selected according to the type of emulsion used at each particular time. Further, the controlling material and the amount thereof in the emulsion mix are naturally affected by the length of the desired processing time. The effect of the controlling materials on the breakability can be determined in experiments, and for instance tables can be drawn up, according to which the need for a particular controlling material can be determined in a quick and simple way.

The controlling material according to the invention can be for example crushed aggregate made by crushing, aggregate formed of grains having a totally natural surface, or a mixture thereof. Controlling materials can be used in different grain sizes, i.e. fractions, and as combinations thereof. Using different grain sizes enables tailoring of the mix properties in accordance with the requirements of a particular object of application. The grain size of the breaking-time-controlling material can be selected in such a way that it functions not only in controlling the breaking index of the emulsion mix but also for other purposes. For example, in one preferred embodiment a controlling material classified as fine aggregate, i.e. having a grain size of below 0.063 mm, or as fine stone aggregate, i.e. having a grain size of 0.0063 to 2 mm, forms with other fine aggregates, fine stone aggregates, bitumen and possible additives an asphalt mastic, which binds the coarser components in the emulsion mix to each other. Granulated blast-furnace slag and slag powder ground out of it also have properties of a hydraulic binding agent, in other words they harden due to the effect of the free water in the emulsion mix into a binding agent that stiffens the surfacing.

The drawing and the related description are merely intended to illustrate the idea of the invention. The details of the invention may vary within the scope of the claims. Therefore, the breaking-time-controlling material may also comprise silicon-containing material other than quartzite, feldspar, granulated blast-furnace slag and slag powder. The invention may be applied for example in connection with soft asphalt concretes (PAB-B surfacing), asphalt concrete (AB surfacing), stone mastic asphalt (SMA surfacing) in both ordinary mixes and reclaimed mixes.

## Claims

1. An emulsion surfacing mix for paving a road, comprising bitumen, water, coupling agent, emulsifier, aggregate and breaking-controlling agent, **characterized in that** the breaking-controlling agent is added as a mixture with the aggregate and that the breaking-controlling agent comprises granulated blast-furnace slag, quartzite and/or feldspar.

2. An emulsion surfacing mix according to claim 1,
   **characterized in that** the breaking-controlling agent further comprises slag powder.

3. An emulsion surfacing mix according to any one of the preceding claims, **characterized in that** the breaking-controlling agent further comprises industry slag.

4. An emulsion surfacing mix according to any one of the preceding claims, **characterized in that** the mix is asphalt.

5. An emulsion surfacing mix according to any one of claims 1 to 4, **characterized in that** the mix is reclaimed asphalt.

6. An emulsion surfacing mix according to any one of the preceding claims, **characterized in that** at least part of the breaking-controlling agent is, as regards the grain size, fine aggregate.

7. An emulsion surfacing mix according to any one of the preceding claims, **characterized in that** at least part of the breaking-controlling agent is, as regards the grain size, fine stone aggregate.

8. A road surfacing, **characterized in that** it is at least partly made of the emulsion surfacing mix according to claim 1.

## Patentansprüche

1. Emulsions-Oberflächenmischung zum Befestigen einer Straße, umfassend Bitumen, Wasser, ein Kupplungsmittel, einen Emulgator, ein Aggregations- und Bruch-Kontrollmittel, **dadurch gekennzeichnet, dass** das Bruch-Kontrollmittel als Mischung mit dem Aggregat zugegeben wird und dass das Bruch-Kontrollmittel granulierte Hochofenschlacke, Quarzit und/oder Feldspat umfasst.

2. Emulsions-Oberflächenmischung gemäß Anspruch 1, **dadurch gekennzeichnet, dass** das Bruch-Kontrollmittel des Weiteren Schlackepulver umfasst.

3. Emulsions-Oberflächemischung gemäß einem beliebigen der vorstehenden Ansprüche, **dadurch gekennzeichnet, dass** das Bruch-Kontrollmittel des Weiteren Industrieschlacke umfasst.

4. Emulsions-Oberflächemischung gemäß einem beliebigen der vorstehenden Ansprüche, **dadurch gekennzeichnet , dass** die Mischung Asphalt ist.

5. Emulsions-Oberflächenmischung gemäß einem beliebigen der Ansprüche 1 bis 4, **dadurch gekennzeichnet , dass** die Mischung regenerierter Asphalt ist.

6. Emulsions-Oberflächenmischung gemäß einem beliebigen der vorstehenden Ansprüche, **dadurch gekennzeichnet, dass** mindestens ein Teil des Bruch-Kontrollmittels ein im Bezug auf die Korngröße feines Aggregat ist.

7. Emulsions-Oberflächenmischung gemäß einem beliebigen der vorstehenden Ansprüche, **dadurch gekennzeichnet, dass** mindestens ein Teil des Bruchkontrollmittels Feine-Steine-Aggregat bzw. Kiesel-Aggregat ist.

8. Straßenoberfläche, **dadurch gekennzeichnet, dass** sie mindestens teilweise aus der Emulsions-Oberflächenmischung gemäß Anspruch 1 hergestellt ist.

**Revendications**

1. Mélange de revêtement en émulsion pour le pavage de routes, comprenant du bitume, de l'eau, un agent de couplage, un émulsifiant, des agrégats et un agent de contrôle de rupture, **caractérisé en ce que** l'agent de contrôle de rupture est ajouté sous forme de mélange avec les agrégats, et **en ce que** l'agent de contrôle de rupture comprend du laitier de haut-fourneau en granulés, de la quartzite et/ou du feldspath.

2. Mélange de revêtement en émulsion selon la revendication 1, **caractérisé en ce que** l'agent de contrôle de rupture comprend en outre de la poudre de laitier.

3. Mélange de revêtement en émulsion selon l'une quelconque des revendications précédentes, **caractérisé en ce que** l'agent de commande de rupture comprend en outre du laitier industriel.

4. Mélange de revêtement en émulsion selon l'une quelconque des revendications précédentes, **caractérisé en ce que** le mélange est de l'asphalte.

5. Mélange de revêtement en émulsion selon l'une quelconque des revendications 1 à 4, **caractérisé en ce que** le mélange est de l'asphalte de récupération.

6. Mélange de revêtement en émulsion selon l'une quelconque des revendications précédentes, **caractérisé en ce qu'**au moins une partie de l'agent de contrôle de rupture est, pour ce qui concerne la taille des grains, un agrégat fin.

7. Mélange de revêtement en émulsion selon l'une quelconque des revendications précédentes, **caractérisé en ce qu'**au moins une partie de l'agent de contrôle de rupture est, pour ce qui concerne la taille des grains, un agrégat de pierres fines.

8. Revêtement routier, **caractérisé en ce qu'**il est au moins partiellement réalisé avec le mélange de revêtement en émulsion selon la revendication 1.

FIG. 1

**EP 1 268 673 B1**

**REFERENCES CITED IN THE DESCRIPTION**

**Patent documents cited in the description**

- EP 0655484 A
- WO 9410247 A
- DE 3245068 A
- US 5223031 A